Europäisches Patentamt

European Patent Office

Office européen des brevets

(11) Publication number: **0 188 357**
**A2**

(12) # EUROPEAN PATENT APPLICATION

(21) Application number: 86300187.1

(22) Date of filing: 14.01.86

(51) Int. Cl.⁴: **B 29 C 63/08**

(30) Priority: 15.01.85 GB 8500988

(43) Date of publication of application:
23.07.86 Bulletin 86/30

(84) Designated Contracting States:
DE FR GB NL

(71) Applicant: BARPRO LIMITED
44 Victoria Street
Aberdeen AB1 1XA(GB)

(72) Inventor: Barrows, Brian Faraday
38 Cammo Grove Barnton
Edinburgh EH4 8EX(GB)

(74) Representative: Murgitroyd, Ian G. et al,
Ian G. Murgitroyd and Company 49 Bath Street
Glasgow G2 2DL(GB)

(54) Method of applying protective coatings to structures.

(57) A method of applying protective coatings to structures comprises applying a bonding agent to a structural member and to one surface of an antifouling material strip. An end portion of the antifouling material strip is then helically wound under tension along a length of the structural member. A second end portion of the antifouling strip is fixed to the structural member remote from the first portion and heat is applied to bond the antifouling material strip in place on the structural member.

Fig 3

## Method of Applying Protective Coatings to Structures

This invention relates to a method of applying protective coatings to structures particularly but not exclusively to applying antifouling tape to tubular structures.

## Background of the Invention

Previously the preferred method of installing antifouling material products to tubular structures has been by vulcanisation or hot bonding; this is desirable to avert the risk of disbondment and subsequent water ingression which produces undesirable corrosion problems. This is a complex process evolved from the techniques commonly used for elastomer coating of rollers as used in many manufacturing processes. This was evolved to coat offshore oil pipeline vertical risers with corrosion resistant elastomer coatings and has always been conducted in a factory equipped for such works. This involved costly shipping of tubulars from the fabrication yard to a specialised factory seldom conveniently located for this. Previous methods of antifouling sheathing by Cu/Ni and elastomer composites have been evolved around such processes, they are dependent on external pressure steam curing at 260°F and pressures of 100-150 psi to consolidate the material.

## Brief Summary of the Invention

It is an object of the present invention to provide a method of application of protective coating to structures which allow such protective coatings to be applied to structures at their fabrication site.

According to the present invention there is provided a method of applying protective coatings to structures comprising applying a bonding agent to a structural member, fixing an end portion of an antifouling material strip to the structural member, helically winding the antifouling material strip under tension along a length of the structural member, fixing a second end portion of the antifouling strip to the structural member remote from the first portion and applying heat to bond the antifouling material strip to the structural member.

Preferably, the antifouling material strip is a copper alloy and elastomer material composite.

Preferably also, a coating of elastomer material is affixed to the structural member prior to the application of the antifouling material strip using said bonding agent.

Preferably also, the structural member is initially cleaned using an abrasive material.

Preferably also, the bonding agent is a two part bonding agent.

Preferably also, the antifouling material strip is helically wound under a tension of 200 psi.

Preferably also, heat is applied by means of electrical resistance heaters or high temperature steam to maintain a temperature in the range of $240^{\circ}F-260^{\circ}F$ in the material.

Brief Description of the Several Views of the Drawings

Embodiments of the present invention will now be described, by way of example, with reference to the accompanying drawings, in which:-

Figs. 1 to 8 illustrate sequentially the steps involved in applying a protective coating to a pipeline in accordance with the method of the present invention.

Fig. 9 is a part cut away perspective view of a second embodiment of a protective coating for use in the method of the present invention; and

Fig. 10 shows a subsea identification sign for use in combination with the protective coating applied by the method of the present invention.

Detailed Description

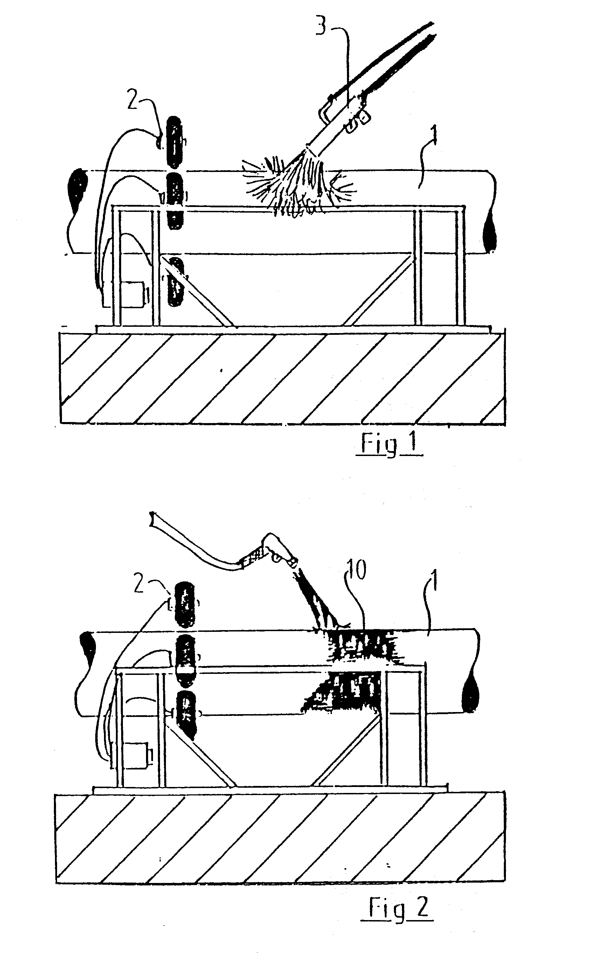

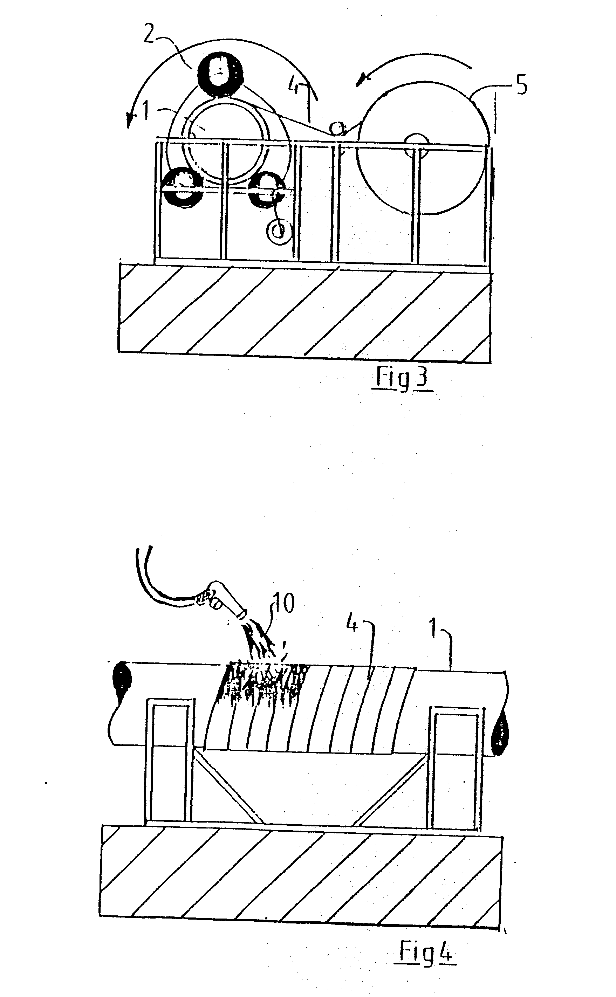

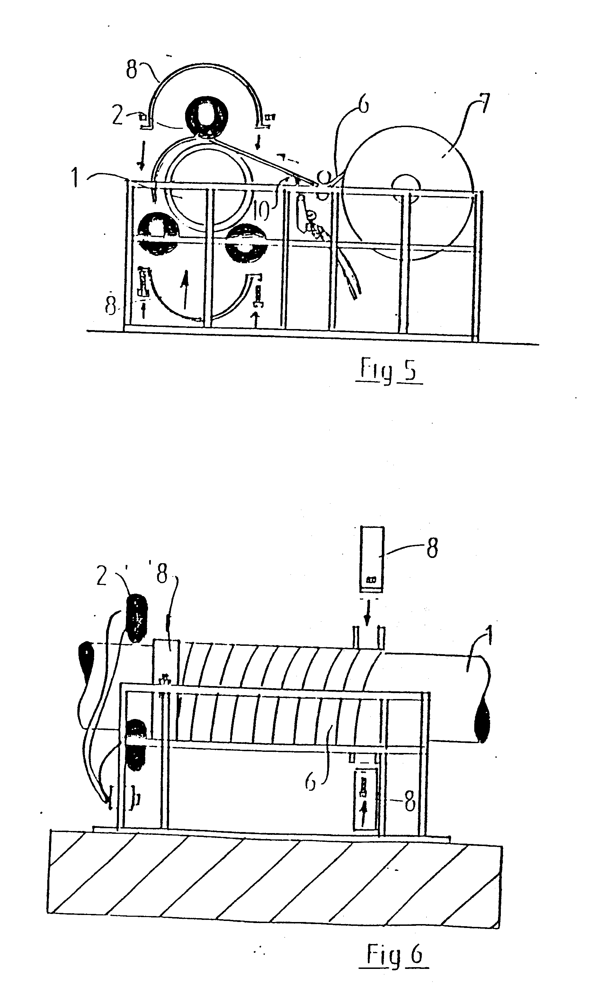

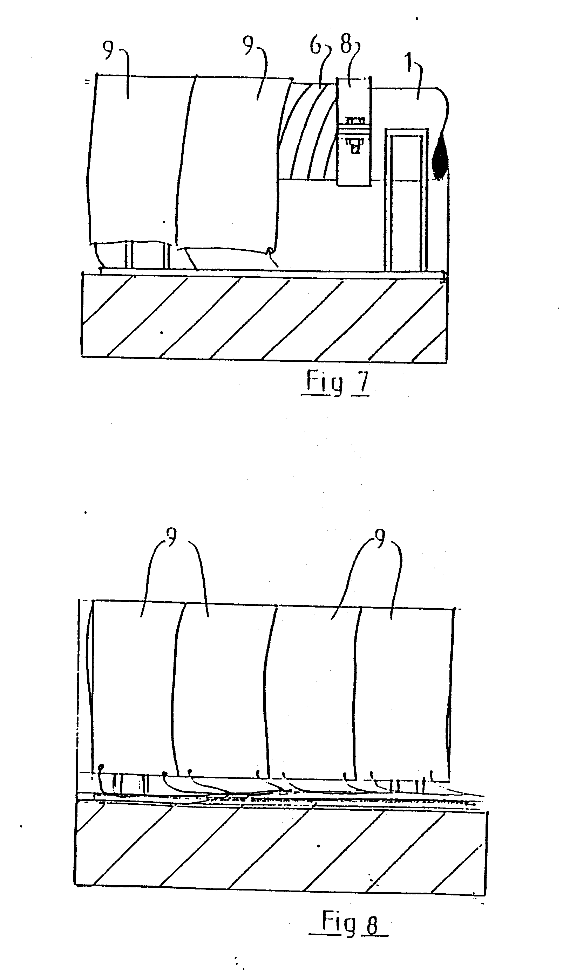

Referring to Figs. 1 to 8 of the drawings a method of applying an antifouling coating to a tubular structure in the form of a pipe 1 is illustrated.

The pipe 1 is first mounted in a pipe rotating frame 2 and then cleaned by means of shotblasting apparatus. The pipe 1 is then coated with one part of a two part bonding agent 10. Uncured sheet or strips of elastomer 4 are then wound onto the pipe 1 from a reel 5. The elastomer 4 forms a coating of sufficient depth to prevent the copper in the subsequently applied antifouling tape 6 from coming into contact with the steel in the event of impact damage. The elastomer 4 coating has a thickness in the range of 6 mm to 10 mm.

The outer surface of this elastomer 4 and the back and side surfaces of the antifouling tape 6 are then coated with respective parts of a two part bonding agent 10.

The antifouling tape 6 is a composite of copper and elastomer. The tape 6 is supplied from a tension winder spool 7. The first winding of the tape 6 is completed around the circumference of the pipe 1 and is secured by a clamp bond 8. The speed of rotation of the rotating frame 2 and lengthwise feed of the pipe 1 are set to obtain the correct tape winding angle to ensure close alignment of the edges of the tape 6.

The tape 6 then winds helically onto the pipe 1 at a tension of 200 psi. The edges of the tape 6 are angled at 45° to exert tension onto overlapping seams to ensure continuous contact. A rubber or wooden mallet (not shown) is used to hammer down any high spots at the seams.

The rollers which contact the pipe are of large diameter to ensure that the load is spread over a large area of the coating to avoid damage. The tension winder apparatus should also be positively driven past the pipe to ensure even tensioning. Tension measuring instruments may be included if desired to ensure even winding of the tape.

When the tape 6 has been wound along the length of the section of pipe 1 being treated the second end of the tape 6 is clamped by a second clamp band 8 to retain the tension in the tape 6. The tension has to be maintained to allow the tape 6 coating to be consolidated into a continuous impermeable coating free of voids or blisters beneath the
outer copper surface.

Heat is applied to the centre and ends of the pipe 1 by
means of electric resistance heaters 9 which serve to
maintain a temperature of 240°F to 260°F in the curing
elastomer. The copper surface may be heated either by the
passage of DC electric current through the material or by
utilising its thermal conductivity to evenly dissipate heat
over the surface. The curing process may take up to five
hours depending on the thickness of coating.

An alternative method, not illustrated, of heating the pipe
1 is by using high temperautre steam. Annular seals are
inserted in the pipe at either end. These seals provide
steam injection means at one end of the pipe and steam
return means at the other end. The pipe may also be tilted
to allow condensed water to drain back through the return
line. To ensure even heat dissipation the outside of the
pipe is insulated with rockwool insulation.

After completion the exposed copper surface is cleaned with
a solution of 12% aerated sulphuric acid to restore it to
bright copper free of any contamination.

The coating thus produced has excellent antifouling
properties when the structure is immersed in seawater.

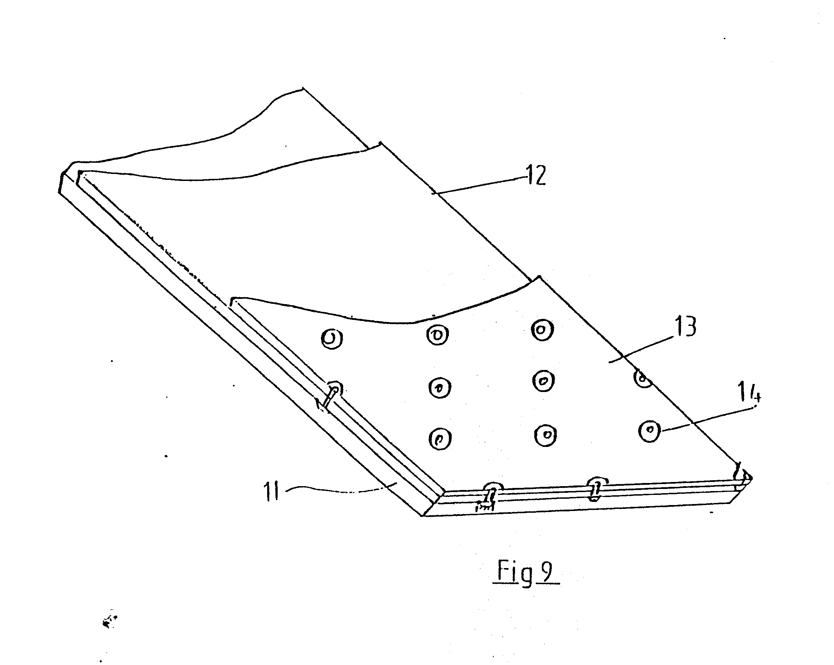

Fig. 9 illustrates a second embodiment of an antifouling
tape for use in the method of the invention. This tape is a
triple layer composite comprising a lower layer of elastomer
11, a centre layer of copper or copper alloy 12 and a thin
outer layer of Teflon 13.

The elastomer 11 is bonded to the copper 12 with a bonding agent. The lower surface of the Teflon is chemically etched to provide a good key for bonding. The composite material is then mechanically secured by copper rivets 14 situated at regular intervals over the surface and comprising no more than 12% of the total surface area.

This tape is fixed to structures by the method described above and provides an effective antifouling coating.

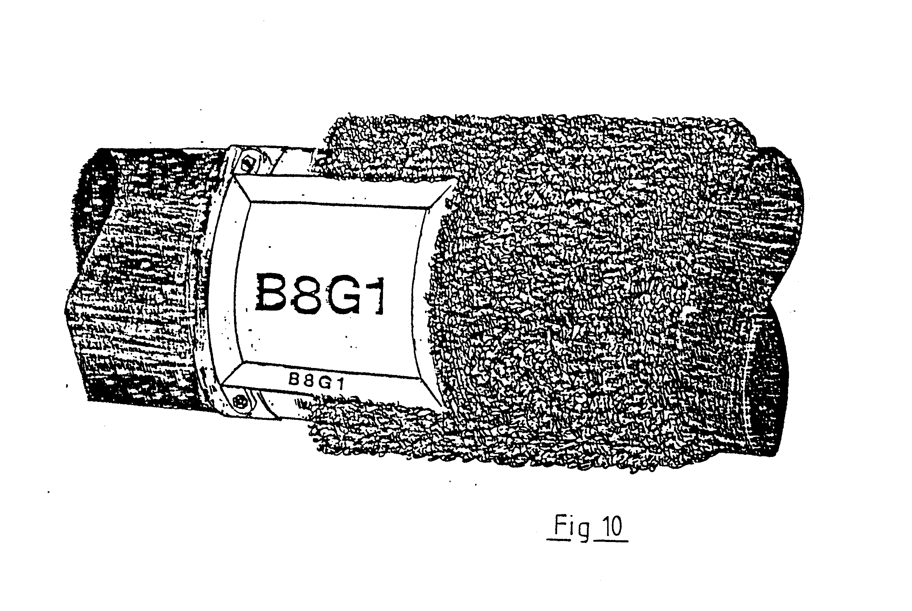

The upper surface of the rivets 14 provides a release of copper ions, toxic to most fouling organisms whilst the use of Teflon for the major surface provides an extremely low surface friction coefficient which unless badly scratched to provide a suitable key will not allow easy attachment of bio-fouling. The use of a thin film of this ensures that abrasions or scratches which occur will expose the copper beneath and provide an additional toxic release at the scratches which will ultimately prevent settlement there by fouling species. The elastomer backing gives a good corrosion block and affords a high strength fixing in the manner described in the method above. The product is of particular value for the intermittent wet/dry splash zone of structures where galvanic action on copper bearing products is intermittent, and also for subsea sign systems where colour contrast and high legibility is necessary. The smooth surface enhances legibility of these by preventing settlement from copper tolerant species, silt and other fine debris common in seawater thereby enhancing their legibility. Fig. 10 illustrates a subsea identification sign of this material configured to prevent its becoming obscured by dense fouling.

The identification sign comprises a truncated block with all five outer surfaces manufactured from elastomer material. This is moulded into a lightweight cellular Hypalon (Trade Mark) block with its fixing locations reinforced with two grade 316 stainless steel strips. The block presents a high profile to biofouling with 45° gradients on all sides. Fouling at the same level as the upper surface will weaken in endeavouring to overhang the upper panel surface and ultimately slough off since its anchor point will be greatly extended from the extremities of the panel. The panel has a high degree of energy absorption and will collapse and reform under impact or snagging loads. It has no snag points for umbilicals or cables, and will conform to radii down to 375 mm.

Further modifications and improvements may be made without departing from the scope of the invention.

CLAIMS

1.  A method of applying protective coatings to structures comprising applying a bonding agent to a structural member, fixing an end portion of an antifouling material strip to the structural member, helically winding the antifouling material strip under tension along a length of the structural member, fixing a second end portion of the antifouling strip to the structural member remote from the first portion and applying heat to bond the antifouling material strip to the structural member.

2.  A method according to Claim 1, wherein the antifouling material strip is a copper alloy and elastomer material composite.

3.  A method according to Claim 1 or 2, wherein a coating of elastomer material is affixed to the structural member prior to the application of the antifouling material strip using said bonding agent.

4.  A method according to any one of the preceding Claims, wherein the structural member is initially cleaned using an abrasive material.

5.  A method according to any one of the preceding Claims, wherein the bonding agent is a two part bonding agent.

6.  A method according to any one of the preceding Claims, wherein the antifouling material strip is helically wound under a tension of 200 psi.

7.  A method according to any one of the preceding Claims, wherein heat is applied to the antifouling material by means of electrical resistance heaters.

8. A method according to any one of Claims 1 to 6, wherein heat is applied to the antifouling material by high temperature steam.

9. A method according to Claim 7 or Claim 8, wherein the antifouling material is heated to a temperature in the range $240^{\circ}F$-$260^{\circ}F$.

Fig 1

Fig 2

Fig 3

Fig 4

Fig 5

Fig 6

Fig 7

Fig 8

Fig 9

Fig 10